# EUROPEAN PATENT APPLICATION

(11) **EP 4 521 393 A1**
(43) Date of publication of application: **12.03.2025**
(21) Application number: 23889150.1
(22) Date of filing: 08.11.2023
(51) Int. Cl.: G10L 15/06, G10L 15/22, G10L 15/04, G10L 13/08, G06F 3/16, G10L 15/26, G10L 17/20

(54) **ELECTRONIC DEVICE FOR PERFORMING VOICE RECOGNITION, AND CONTROL METHOD THEREFOR**

(30) Priority: 11.11.2022 KR 20220151015; 14.12.2022 KR 20220174784
(71) Applicant: Samsung Electronics Co., Ltd., Suwon-si, Gyeonggi-do 16677 (KR)
(72) Inventor: LEE, Kyungmin, Suwon-si, Gyeonggi-do 16677 (KR); ROH, Jaeyoung, Suwon-si, Gyeonggi-do 16677 (KR); YOO, Jonguk, Suwon-si, Gyeonggi-do 16677 (KR); HAN, Youngho, Suwon-si, Gyeonggi-do 16677 (KR); KIM, Haeri, Suwon-si, Gyeonggi-do 16677 (KR)
(74) Representative: Gulde & Partner
(86) International application number: PCT/KR2023/017891
(87) International publication number: WO 2024/101892

(57) **Abstract**

An electronic device includes: one or more processors being configured to: while the electronic device operates in a speech recognition mode, perform speech recognition by inputting a user speech signal from the microphone into a speech recognition model, obtain environment information around the electronic device while the user speech is received according to a result of the speech recognition, store the obtained environment information in the memory, identify an external device for outputting a user speech for learning from among a plurality of external devices based on the environment information that is among a plurality of environment information stored in the memory, control the communication interface to transmit a command to the external device for controlling the output of the user speech for learning.

## Description

### TECHNICAL FIELD

The disclosed embodiments relate to an electronic device and a control method thereof and, more particularly to, an electronic device performing speech recognition in consideration of misrecognition situation and a control method thereof.

### BACKGROUND ART

Various types of conventional electronic devices are developed and distributed and, more particularly, conventional electronic devices controllable by using a user speech may be distributed to houses for convenient manipulation of a user.

However, conventional methods are merely configured to increase recognition performance and recognition accuracy for speech recognition by training a speech recognition model by using vast data.

In particular, it is desirable for a speech recognition model which trains a speech recognition model in consideration of an actual use environment of the electronic device, a surrounding environment (for example, ambient noise) of the electronic device while the user speech is received, and considering ambient environment.

### SUMMARY

An electronic device may include: a speaker; a microphone; a communication interface; a memory storing at least one instruction; and one or more processors connected to the speaker, the microphone, the communication interface, and the memory. The one or more processors may be configured to: while the electronic device operates in a speech recognition mode, perform speech recognition by inputting a user speech signal from the microphone into a speech recognition model, the user speech signal corresponding to a user speech received through the microphone, obtain environment information around the electronic device while the user speech is received according to a result of the speech recognition, store the obtained environment information in the memory, while the electronic device is operating in a learning mode, identify an external device for outputting a user speech for learning from among a plurality of external devices based on the environment information that is among a plurality of environment information stored in the memory, control the communication interface to transmit a command to the external device for controlling the output of the user speech for learning, and based on receiving a user speech for learning signal from the microphone, the user speech for learning signal corresponding to the user speech for learning outputted by the external device and received by the microphone, train the speech recognition model with respect to the received user speech for learning signal.

The one or more processors may be further configured to: obtain information on a place where the user speech is uttered while the user speech signal is received in the speech recognition mode, the environment information including the information on the place where the user speech is uttered, and identify the external device for outputting the user speech for learning from among the plurality of external devices based on the information on the place where the user speech is uttered.

The one or more processors may be further configured to: obtain operation information of the external device while the user speech signal is received in the speech recognition mode, the environment information including the operation information, transmit, to the external device, a command for operating the external device that corresponds to operation information of the external device, and train the speech recognition model when the external device is operated according to the command for operating the external device and the user speech for learning signal is received.

The one or more processors may be further configured: while the external device is operating according to the command for operating the external device, receive an other noise signal corresponding to an other noise that has occurred in the external device, and train the speech recognition model based on the received user speech signal and the received other noise signal.

The one or more processors may be further configured, in the learning mode, identify an other noise signal corresponding to an other noise that is around the electronic device while the user speech signal is received based on the environment information, control the communication interface to transmit a command to the external device for controlling the external device to output the other noise, and during an outputting of the other noise by the external device according to the command to the external device for controlling the external device to output the other noise, receive the user speech for learning signal and the other noise signal, and train the speech recognition model based on the received user speech for learning and the other noise.

The electronic device may further include a sensor. The one or more processors may be further configured to: obtain object information located around the electronic device based on sensing data of the sensor while the user speech signal is received in the speech recognition mode, the environment information including the object information, based on receiving new sensing data from the sensor, identify whether object information according to the new sensing data corresponds to the object information included in the environment information, based on the object information according to the new sensing data corresponding to the object information included in the environment information, enter the learning mode, and while operating in the learning mode, control the communication interface to transmit a command to the external device for controlling the output of the user speech for learning to the external device.

The one or more processors may be further configured to: while operating in the speech recognition mode, generate a text-to-speech (TTS) model based on the user speech received through the microphone, and obtain the user speech for learning signal based on the TTS model.

Each of the plurality of environment information may include a confidence score about the result of the speech recognition, and based on the confidence score being greater than or equal to a threshold value, includes a text corresponding to the result of the speech recognition.

The one or more processors may be further configured to: based on the electronic device entering the learning mode, identify any of the plurality of environment information stored in the memory of which the confidence score is less than the threshold value, obtain at least one of the plurality of environment information having the confidence score equal to or greater than the threshold value and having a similarity equal to or greater than a threshold similarity to the environment information, and obtain the user speech for learning signal based on the text included in the at least one of the plurality of environment information having the confidence score equal to or greater than the threshold value.

The one or more processors may be further configured to, based on the obtained environment information corresponding to the environment information stored in the memory, increase repetition frequency information included in the environment information.

The one or more processors may be further configured to: based on the repetition number information included in the environment information being equal to or greater than a threshold number of times, obtain at least one of the plurality of environment information having a confidence score of the result of the speech recognition being equal to or greater than a threshold value, and having a similarity equal to or greater than a threshold similarity, obtain the user speech for learning signal based on text included in the at least one environment information, and wherein as the repetition number information increases, the threshold similarity is reduced.

The one or more processors may be further configured to, based on a preset event being identified, enter the electronic device to the learning mode.

A method of controlling an electronic device may include: while the electronic device operates in a speech recognition mode, performing speech recognition by inputting a user speech signal from a microphone into a speech recognition model, the user speech signal corresponding to a received user speech received through the microphone; obtaining environment information around the electronic device while the user speech is received according to a result of the speech recognition; storing the obtained environment information in a memory, while the electronic device is operating in a learning mode, identifying an external device for outputting a user speech for learning from among a plurality of external devices based on the environment information that is among a plurality of environment information stored in the memory; transmitting a command to the external device for controlling the output of the user speech for learning; and based on receiving a user speech for learning signal from the microphone, the user speech for learning signal corresponding to the user speech for learning outputted by the external device and received by the microphone, training the speech recognition model with respect to the received user speech for learning signal.

The obtaining the environment information may include obtaining information on a place where the user speech is uttered while the user speech signal is received in the speech recognition mode, the environment information including the information on the place where the user speech is uttered. The identifying the external device may include identifying the external device for outputting the user speech for learning from among the plurality of external devices based on the information on the place where the user speech is uttered.

The obtaining the environment information may include obtaining operation information of the external device while the user speech signal is received in the speech recognition mode, the environment information including the operation information. The transmitting may include transmitting, to the external device, a command for operating the external device that corresponds to operation information of the external device. The training may include training the speech recognition model when the external device is operated according to the command for operating the external device and the user speech for learning signal is received.

The method may further include: while the external device is operating according to the command for operating the external device, receiving an other noise signal corresponding to an other noise that has occurred in the external device, and training the speech recognition model based on the received user speech signal and the received other noise signal.

The method may further include: in the learning mode, identifying an other noise signal corresponding to an other noise that is around the electronic device while the user speech signal is received based on the environment information, controlling the communication interface to transmit a command to the external device for controlling the external device to output the other noise, and during an outputting of the other noise by the external device according to the command to the external device for controlling the external device to output the other noise, receiving the user speech for learning signal and the other noise signal, and training the speech recognition model based on the received user speech for learning and the other noise.

The method may further include: obtaining object information located around the electronic device based on sensing data of a sensor while the user speech signal is received in the speech recognition mode, the environment information including the object information, based on receiving new sensing data from the sensor, identifying whether object information according to the new sensing data corresponds to the object information included in the environment information, based on the object information according to the new sensing data corresponding to the object information included in the environment information, entering the learning mode, and while operating in the learning mode, controlling the communication interface to transmit a command to the external device for controlling the output of the user speech for learning to the external device.

The method may further include: while operating in the speech recognition mode, generating a text-to-speech (TTS) model based on the user speech received through the microphone, and obtaining the user speech for learning signal based on the TTS model.

Each of the plurality of environment information may include a confidence score about the result of the speech recognition, and based on the confidence score being greater than or equal to a threshold value, may include a text corresponding to the result of the speech recognition. The method may further include: based on the electronic device entering the learning mode, identifying any of the plurality of environment information stored in the memory of which the confidence score is less than the threshold value, obtaining at least one of the plurality of environment information having the confidence score equal to or greater than the threshold value and having a similarity equal to or greater than a threshold similarity to the environment information, and obtaining the user speech for learning signal based on the text included in the at least one of the plurality of environment information having the confidence score equal to or greater than the threshold value.

### BRIEF DESCRIPTION OF DRAWINGS

FIG. 1 is a diagram illustrating an electronic device for receiving a user voice in a voice recognition mode according to one or more embodiments of the disclosure.
FIG. 2 is a diagram illustrating an external device for outputting a user voice for learning in a learning mode according to one or more embodiments of the disclosure.
FIG. 3 is a block diagram illustrating a configuration of an electronic device according to one or more embodiments of the disclosure.
FIG. 4 is a diagram illustrating a method for obtaining environment information according to one or more embodiments of the disclosure.
FIG. 5 is a diagram illustrating a method for obtaining a user voice for learning based on environment information according to one or more embodiments of the disclosure.
FIG. 6 is a diagram illustrating a method for outputting a user voice for learning according to one or more embodiments of the disclosure.
FIG. 7 is a diagram illustrating a method for training a voice recognition model according to one or more embodiments of the disclosure.
FIG. 8 is a flowchart illustrating a method for controlling an electronic device according to one or more embodiments of the disclosure.

### DETAILED DESCRIPTION

The disclosed embodiments will be described in greater detail with reference to the attached drawings.

The terms used in herein and in the claims are general terms identified in consideration of the functions of disclosed embodiments. However, these terms may vary depending on intention, legal or technical interpretation, emergence of new technologies, of those skilled in the related art. In addition, in some cases, a term may be selected by the applicant, in which case the term will be described in detail. Thus, the term used should be defined based on the meaning of term, not a simple name of the term, and the contents as disclosed throughout.

Expressions such as "have," "may have," "include," "may include" or the like represent presence of corresponding numbers, functions, operations, or parts, and do not exclude the presence of additional features.

Expressions such as "at least one of A or B" and "at least one of A and B" should be understood to represent "A," "B" or "A and B."

As used herein, terms such as "first," and "second," may identify corresponding components, regardless of order and/or importance, and are used to distinguish a component from another without limiting the components.

In addition, a description that one element (e.g., a first element) is operatively or communicatively coupled with/to" or "connected to" another element (e.g., a second element) should be interpreted to include both the first element being directly coupled to the second element, and the first element being indirectly coupled to the second element through a third element.

A singular expression includes a plural expression, unless otherwise specified. It is to be understood that terms such as "comprise" or "consist of" are used herein to designate a presence of a feature, number, step, operation, element, component, or a combination thereof, and not to preclude a presence or a possibility of adding one or more of other features, numbers, steps, operations, elements, components or a combination thereof.

A term such as "module," "unit," and "part," is used to refer to an element that performs at least one function or operation and that may be implemented as hardware or software, or a combination of hardware and software. Except when each of a plurality of "modules," "units," "parts," and the like must be realized in an individual hardware, the components may be integrated in at least one module or chip and be realized in at least one processor.

**In** the following description, a "user" may refer to a person using an electronic apparatus or an artificial intelligence electronic apparatus using an electronic apparatus (e.g., artificial intelligence electronic apparatus).

An embodiment will be described in more detail with reference to the accompanying drawings.

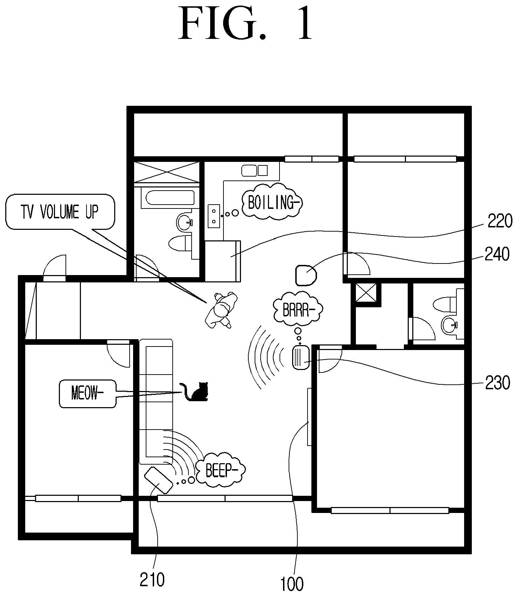

FIG. 1 is a diagram illustrating an electronic device for receiving a user voice in a voice recognition mode according to one or more embodiments of the disclosure.

An electronic device 100 may operate in a speech recognition mode and a learning mode (or a learning data receiving mode or a speech recognition model learning mode).

The speech recognition mode is a mode for activating a configuration for speech recognition and performing a function corresponding to a user speech by recognizing the received user speech. For example, the electronic device 100 may perform speech recognition by inputting a user speech into a speech recognition model while operating in a speech recognition mode. Subsequently, the electronic device 100 may identify confidence score for speech recognition.

According to one or more embodiments, the electronic device 100 may perform a function corresponding to a user speech according to a speech recognition result when the confidence score of the speech recognition is greater than or equal to a threshold value (that is, when the user speech is recognized). **In** addition, the electronic device 100 may ignore the speech recognition result if the confidence score of the speech recognition is less than a threshold value (that is, when the user speech is misrecognized).

A plurality of external devices 210, 220, 230, 240 may be provided in addition to the electronic device 100 at home, and if noise (for example, beep sound, vibration sound (Brrr)) according to the operation of each of the plurality of external devices 210, 220, 230, 240 and noise (for example, crying sound of a pet) of a pet are received together, a probability of misrecognition of user speech may increase.

According to one or more embodiments, when the confidence score about speech recognition is less than a threshold value, the electronic device 100 may obtain environment information around the electronic device 100 while a user speech is received by not only ignoring the speech recognition result, and may train the speech recognition model by reproducing the misrecognition environment of the user speech based on the obtained environment information.

The speech recognition model trained in the reproduced misrecognition environment performs speech recognition on the user speech in consideration of the environment at home, and thus the probability of recognizing the user speech even when the user speech and noise are received together, that is, the probability that the confidence score of speech recognition is greater than or equal to a threshold value may increase.

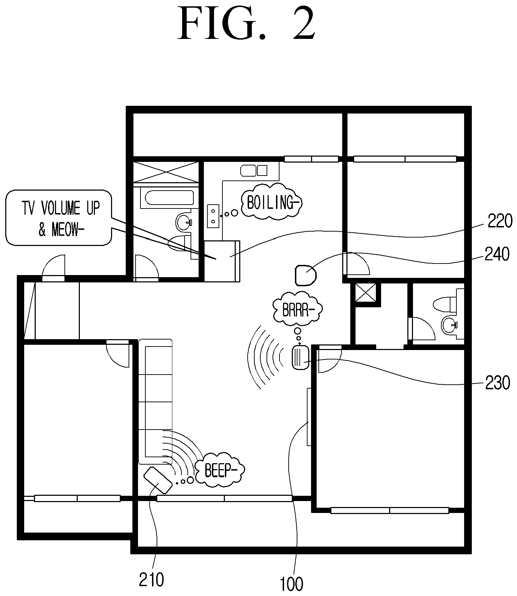

FIG. 2 is a diagram illustrating an external device for outputting a user voice for learning in a learning mode according to one or more embodiments of the disclosure.

The electronic device 100 may enter a learning mode when a preset event is identified or a current surrounding environment of the electronic device 100 is similar to a misrecognition environment for the user speech. However, this is merely an example, and the embodiment is not limited thereto. For example, the electronic device 100 may enter a learning mode according to a user command.

The learning mode may be a mode in which the electronic device 100 outputs the user speech for learning (or controls the external electronic device 200 at home to output the user speech for learning), and train the speech recognition model by using the received user speech for learning as learning data.

According to one or more embodiments, the electronic device 100 may obtain a user speech for learning based on any one environment information among a plurality of pieces of environment information stored in the electronic device 100 while operating in a learning mode. Subsequently, the electronic device 100 may transmit, to any one external device, a command for controlling the electronic device 100 to output the user speech for learning by itself or the external device of the plurality of external devices 210, 220, 230, 240 located around the electronic device 100 to output the user speech for learning.

The electronic device 100 may, when user speech for learning output by the electronic device 100 or the external device 200 is received, train the speech recognition model based on the received user speech for learning.

**In** particular, the electronic device 100 may identify a place where a user speech is uttered in a misrecognition environment of a user speech based on any one environment information among a plurality of pieces of environment information, and identify any one external device for outputting a user speech for learning among the plurality of external devices 210, 220, 230, 240 based on the place where the user speech is uttered.

Referring to FIGS. 1 and 2, since a place where a user speech is uttered is adjacent to a place in which the refrigerator 220 is provided, the electronic device 100 according to one or more embodiments may transmit a command to the refrigerator 220 so that the refrigerator 220 utters a user speech for learning.

Here, the any one of environment information may, when confidence score about a speech recognition result is less than a threshold value, mean environment information around the electronic apparatus 100 obtained while the user speech is being received.

In addition, the electronic device 100 may operate each of the plurality of external devices 210, 220, 230, 240 to correspond to the operation state of each of the plurality of external devices 210, 220, 230, 240 while the user speech is being received based on any one environment information to reproduce the misrecognition environment.

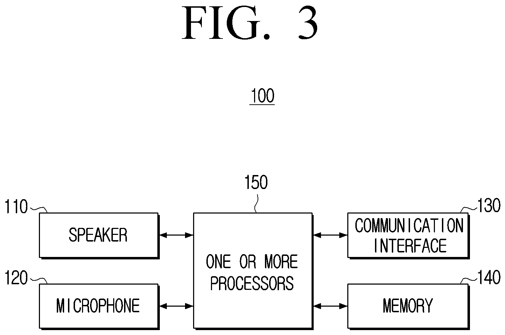

FIG. 3 is a block diagram illustrating a configuration of an electronic device according to one or more embodiments of the disclosure.

The electronic device 100 may include a speaker 110, a microphone 120, a communication interface 130, a memory 140, and one or more processors 150.

The speaker 110 provided in the electronic device 100 may output a sound signal. The speaker 110 may include at least one speaker unit (or audio amplifier).

For example, the speaker 110 may be implemented with at least one full range speaker designed to output almost all range of sound of audible frequency, or a speaker array including a plurality of speaker units to reproduce different frequency bandwidths.

The microphone 120 provided in the electronic device 100 may receive a user speech and transmit the received user speech to the one or more processors 150. Subsequently, the one or more processors 150 may perform speech recognition by inputting the received user speech into a speech recognition model. For example, the one or more processors 150 may perform speech recognition (STT) text on a user speech to perform speech recognition on the user speech.

The communication interface 130 provided in the electronic device 100 may receive various types of data and information in communication with each of a plurality of external devices 210, 220, 230, 240. For example, the communication interface 130 may receive various types of data, information, from an external device, external storage medium (e.g., USB memory), external server (e.g., webhard), through communication methods using an AP-based Wi-Fi (Wireless Local Area Network), Bluetooth, Zigbee, wired/wireless local area network (LAN), WAN (Wide Area Network), Ethernet, IEEE1394, High Definition Multimedia Interface (HDMI), Universal Serial Bus (USB), Mobile High-Definition Link (MHL), Audio Engineering Society/European Broadcasting Union (AES/EBU), optical, coaxial.

In particular, the communication interface 130 may receive operation information of each of the plurality of external devices 210, 220, 230, 240 under the control of the one or more processors 150, and transmit a command for controlling each of the plurality of external devices 210, 220, 230, 240 to perform a corresponding operation based on the plurality of operation information under the control of the one or more processors 150 in the learning mode of the electronic device 100.

In addition, the communication interface 130 may transmit, to any one external device among a plurality of external devices 210, 220, 230, 240, a command to control to output learning user speech under the control of the one or more processors 150 in the learning mode of the electronic device 100.

According to one or more embodiments, the memory 140 may store data. The memory 140 may be implemented as a memory embedded within the electronic device 100 or a memory detachable from the electronic device 100 according to the usage of data storage.

For example, the data for driving the electronic device 100 may be stored in the memory embedded within the electronic device 100, and the data for upscaling of the electronic device 100 may be stored in the memory detachable from the electronic device 100. The memory embedded in the electronic device 100 may be implemented as at least one of a volatile memory such as a dynamic random access memory (DRAM), a static random access memory (SRAM), a synchronous dynamic random access memory (SDRAM), or a non-volatile memory, such as one time programmable ROM (OTPROM), programmable ROM (PROM), erasable and programmable ROM (EPROM), electrically erasable and programmable ROM (EEPROM), mask ROM, flash ROM, a flash memory, such as NAND flash or NOR flash), a hard disk drive (HDD) or a solid state drive (SSD). In the case of a memory detachably mounted to the electronic device 100, the memory may be implemented as a memory card, such as a compact flash (CF), secure digital (SD), micro secure digital (micro-SD), mini secure digital (mini-SD), extreme digital (xD), or multi-media card (MMC), and an external memory, such as a universal serial bus (USB) memory connectable to the USB port.

According to one or more embodiments, the memory 140 may store at least one instruction for controlling the electronic device 100 or a computer program including instructions.

The one or more processors 150 controls overall operations of the electronic device 100.

According to one or more embodiments, the processor 150 may be implemented with at least one of a digital signal processor (DSP), a microprocessor, and a time controller (TCON). The processor 150 is not limited thereto and may include at least one or more of a central processing unit (CPU), a micro controller unit (MCU), a micro processing unit (MPU), a controller, an application processor (AP), a communication processor (CP), an advanced reduced instruction set computing (RISC) machine (ARM) processor, and an artificial intelligence (AI) processor or may be defined as a corresponding term. The processor 150 may be implemented in a system on chip (SoC) type or a large scale integration (LSI) type in which a processing algorithm is built therein or in a field programmable gate array (FPGA) type. The processor 150 may perform various functions by executing computer executable instructions stored in a memory.

One or more processors 150 may include one or more of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The one or more processors 150 may control one or any combination of other components of the electronic apparatus and may perform operations or data processing relating to the communication. The one or more processors 150 may execute one or more programs or instructions stored in the memory. For example, one or more processors 150 may perform a method by executing one or more instructions stored in a memory.

When a method includes a plurality of operations, a plurality of operations may be performed by one processor or may be performed by a plurality of processors. For example, when a first operation, a second operation, and a third operation are performed by a method according to one or more embodiments, all of the first operation, the second operation, and the third operation may be performed by the first processor, the first operation and the second operation may be performed by a first processor (e.g., a general purpose processor), and the third operation may be performed by a second processor (e.g., an artificial intelligence dedicated processor).

The one or more processors 150 may be implemented as a single core processor including one core, or may be implemented as one or more multicore processors including a plurality of cores (for example, homogeneous multi-cores or heterogeneous multi-cores). When the one or more processors 150 are implemented as a multi-core processor, each of the plurality of cores included in the multi-core processor may include a processor internal memory such as a cache memory and an on-chip memory, and a common cache shared by the plurality of cores may be included in the multi-core processor. In addition, each of a plurality of cores (or a part of a plurality of cores) included in the multi-core processor may independently read and perform a program command for implementing a method, and may read and perform a program command for implementing a method \ in connection with all (or a part of) a plurality of cores.

When the method \ includes a plurality of operations, the plurality of operations may be performed by one core among a plurality of cores included in the multi-core processor or may be performed by the plurality of cores. For example, when a first operation, a second operation, and a third operation are performed by a method according to one or more embodiments, all the first operation, second operation, and third operation may be performed by a first core included in the multi-core processor, and the first operation and the second operation may be performed by a first core included in the multi-core processor and the third operation may be performed by a second core included in the multi-core processor.

The processor may mean a system-on-chip (SoC), a single core processor, a multi-core processor, or a core included in a single core processor or a multi-core processor in which one or more processors and other electronic components are integrated, wherein the core may be implemented as a CPU, a GPU, an APU, a MIC, a DSP, an NPU, a hardware accelerator, or a machine learning accelerator, but disclosed embodiments are not limited thereto.

According to one or more embodiments, one or more processors 150 may perform speech recognition by inputting the user speech received through the microphone 120 to the speech recognition model.

The one or more processors 150 may obtain environment information around the electronic device 100 during receiving the user speech according to the speech recognition result.

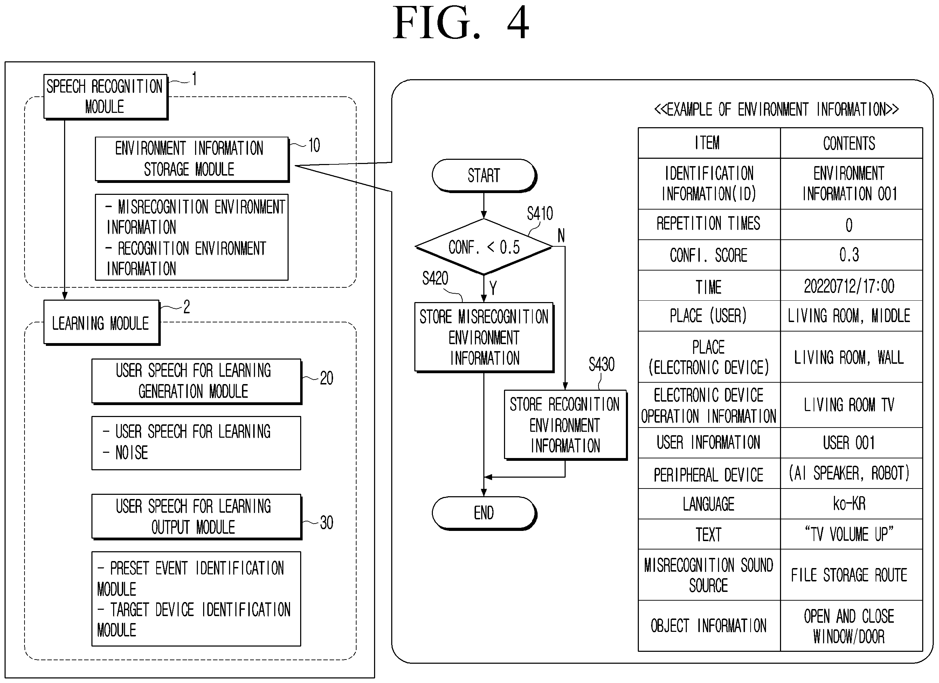

A specific description relating to environment information will refer to FIG. 4.

FIG. 4 is a diagram illustrating a method for obtaining environment information according to one or more embodiments of the disclosure.

First, the electronic device 100 may include an environment information storage module 10 for obtaining and storing environment information, a learning user speech generation module 20 for generating a learning user speech, and a learning user speech output module 30 for controlling the electronic device 100 or the external device so as to output the generated learning user speech.

While the electronic device 100 operates in a speech recognition mode, the electronic apparatus 100 according to one or more embodiments may perform speech recognition by inputting the user speech received through the microphone 120 to the speech recognition model.

The electronic device 100 may obtain environment information around the electronic device 100 while the user speech is received according to the speech recognition result.

The environment information may include information about environment around the electronic device 100, situation around the user uttering a user speech, during the time when the user speech is uttered and received.

Then, the user speech generation module 20 for learning provided in the electronic device 100 may obtain, as a user speech for learning, a speech expected to be uttered by the user in a misrecognition situation of the user speech based on the environment information. In addition, the user speech generation module 20 may obtain noise generated in a misrecognition situation based on the environment information.

The learning user speech output module 30 provided in the electronic device 100 may operate each of the electronic device 100 or the external device in the same or similar manner as the misrecognition situation based on the environment information, or may output noise generated in the misrecognition situation through the electronic device 100 or the external device to reproduce the misrecognition situation. Subsequently, the learning user speech output module 30 may output the learning user speech obtained by the learning user speech generation module 20 in a reproduced misrecognition situation. **In** addition, if the current surrounding environment of the electronic device 100 is similar to the misrecognition situation, the learning user speech output module 30 may output the learning user speech obtained by the learning user speech generation module 20 through the electronic device 100 or the external device.

The electronic device 100 may train the speech recognition model by receiving learning user speech output by the electronic device 100 or the external device.

Hereinafter, with reference to FIG. 4, an example in which the environment information storage module 10 obtains environment information will be described.

For example, the environment information storage module 10 provided in the electronic device 100 may identify the confidence score about speech recognition based on the speech recognition result about the user speech.

As an example, if the confidence score for speech recognition is less than a threshold value, the environment information storage module 10 may obtain environment information around the electronic device 100 as misrecognition environment information while the user speech is being received, and store the same. For example, the environment information storage module 10 may obtain environment information as misrecognition environment information while a user speech is received and store the same in the memory 140 in operation S420 when a confidence score value for speech recognition is less than a threshold value (for example, 0.5) in operation S410:Y

In addition, when the confidence score of the speech recognition is equal to or greater than a threshold value, the environment information storage module 10 may obtain environment information around the electronic device 100 as recognition environment information while the user speech is being received, and store the same. For example, in operation S430, the environment information storage module 10 may obtain environment information as recognition environment information while a user speech is received and store the environment information in the memory 140 when a confidence score value for speech recognition is equal to or greater than a threshold value (for example, 0.5) in operation S410:N.

For example, the electronic device 100 may obtain the likelihood ratio for speech recognition and may obtain the confidence score about speech recognition based on the obtained likelihood ratio.

For example, the electronic device 100 may obtain a feature parameter by performing a series of noise removal, feature extraction, and normalization on the received user speech, obtain a text having a maximum likelihood for the feature parameter, and obtain confidence score for speech recognition based on the likelihood ratio for the obtained text.

However, this is an example in which the electronic device 100 obtains confidence score for speech recognition, but is not limited thereto. The electronic device 100 may obtain confidence score for speech recognition by using various algorithms.

Hereinbelow, for convenience of description, the environment information obtained by the environment information storage module 10 when the confidence score for speech recognition is less than a threshold value may be referred to as misrecognition environment information, and the environment information obtained when the confidence score for speech recognition is greater than or equal to a threshold value may be referred to as recognition environment information.

According to one or more embodiments, the environment information may include repetition number information, confidence score, a time point at which a user speech is received (or date and time), a place where the user speech is uttered, a place where the electronic device 100 is located, operation information of the electronic device 100, user identification information, external device located therearound, operation information of the external device, language information of the user speech (for example, ko-KR, en-US), speech recognition result (for example, text corresponding to the user speech), sound source information, surrounding object information.

### <Place where the user speech is uttered>

The environment information storage module 10 may identify the user's location based on intensity of a user speech (e.g., intensity of sound pressure dB, intensity of signal received from a wearable device (not shown) of a user, sensing data of a sensor (e.g., camera, light detection and ranging (LiDAR) sensor) provided in the electronic device 100.

For example, the environment information storage module 10 may identify a user's location based on intensity of user speech. For example, the environment information storage module 10 may identify that the user is located close to (or adjacent to) the electronic device 100 as the intensity of the user speech is bigger, and the user is located far from the electronic device 100 as the intensity of the user speech is smaller.

The environment information storage module 10 may communicate with a wearable device of a user and may identify that the stronger the intensity of the signal received from the wearable device, the user is located closer to the electronic device 100.

The environment information storage module 10 may also identify a location of the user based on sensing data of the sensor. For example, the environment information storage module 10 may identify the separation distance of the user from the electronic device 100 based on the sensing data, and identify the location of the user based on the separation distance.

**In** addition, the environment information storage module 10 may include a map corresponding to a space in a network in which the electronic device 100 is located, and may identify any one of a plurality of sub-spaces included in the space as a location where the user speech is uttered based on the map and the identified location of the user. Here, the sub-space may include one space partitioned by a user, and an independent space surrounded by an obstacle (for example, a wall, a threshold) or other entity (for example, a living room, a kitchen, a wardrobe).

For example, the environment information storage module 10 may identify any one sub-space in which the user speech is uttered, among a plurality of sub-spaces based on the map and the identified location of the user.

Then, as described below, one or more processors 150 may identify a device located in the same sub-space as any one of the plurality of external devices 210, 220, 230, 240 or one of the plurality of external devices 210, 220, 230, 240 in order to identify a target device for outputting user speech for learning, noise.

For example, when the electronic device 100 and the user are located in the same sub-space based on the map and the identified location of the user, the one or more processors 150 may identify the electronic device 100 among the electronic device 100 or the plurality of external devices 210, 220, 230, 240 as a target device for outputting user speech for learning, noise.

In another example, when the first external device 210 and the user are located in the same sub-space based on the map and the identified location of the user, the one or more processors 150 may identify the first external device 210 as a target device for outputting user speech for learning, noise.

### <Place where an electronic device is located and information about an operation of an electronic device>

According to one or more embodiments, the environment information storage module 10 may identify a place where the electronic device 100 receiving the user speech is located. For example, the environment information storage module 10 may identify any one sub-space in which the electronic device 100 is located among a plurality of sub-spaces included in a space in the house. The place where the user speech is uttered and the place where the electronic device 100 receiving the user speech is located may be the same or different.

In addition, the environment information storage module 10 may obtain the operation information of the electronic device 100 at the time when the user speech is received. The operation information of the electronic device 100 may include an operation mode (for example, a standby mode, a normal mode, a low power mode, a turbo mode) of the electronic device 100 and configuration information of the electronic device 100.

For example, when the electronic device 100 is implemented with a TV, the operation information of the electronic device 100 may include information about a channel (or content) being output by the electronic device 100, volume (sound magnitude) information.

### <User identification information>

The environment information storage module 10 may identify user identification information based on the feature information of the user speech.

Here, the feature information of the user speech may include utterance frequency information. The user speech may have a unique utterance frequency according to the user's oral structure, age, gender, language, race. According to one or more embodiments, the environment information storage module 10 may identify user identification information corresponding to feature information of a user speech.

When user identification information corresponding to feature information of a user speech is identified, the environment information storage module 10 according to one or more embodiments may obtain environment information including the identified user identification information. For example, the environment information storage module 10 may identify user identification information corresponding to feature information of a previously received user speech if the environment information module 10 has received the user speech having the same/similar feature information as the feature information of the currently received user speech.

As another example, when user identification information corresponding to feature information of a user speech is not identified, the environment information storage module 10 may generate new user identification information and obtain environment information including new user identification information. For example, the environment information storage module 10 may generate new user identification information corresponding to the feature information of the currently received user speech if there is no previously received user speech having the same/similar feature information as the feature information of the currently received user speech.

### <External device located nearby and operation information of the external device>

The environment information storage module 10 may identify at least one external device 210,...,240 located around the electronic device 100.

For example, when the first external device 210 is operable by the Internet of Things (IoT), the environment information storage module 10 may receive the information of the space where the first external device 210 is located, operation information of the first external device 210 at a time point of receiving the user speech by communicating with the first external device 210.

As another example, if the second external device 220 is not operable by the Internet of Things (IoT), the environment information storage module 10 may receive operation information of the second external device 220 and a place where the second external device 220 is located at the time when the user speech is received based on sensing data of a sensor (for example, a camera, a LiDAR sensor) provided in the electronic device 100.

Here, the operation information may include whether an external device is operated, an operation mode of an external device (for example, a standby mode, a low noise mode, a normal mode, a turbo mode), setting information of an external device (for example, sound size information, vibration information).

### <Language information and sound information of user speech>

According to one or more embodiments, the environment information storage module 10 may identify language information (for example, ko-KR, en-US) of a user speech and store the sound source received through the microphone in a file form at the time when the user speech is received. Thus, the sound source may include noise (e.g., speech noise or non-speech noise) in addition to the user speech.

Here, the speech noise may include noise generated by a human, not in a linguistic meaning delivery unit. For example, sneezing, belching, breathing, snoring, laughing, crying, exclamation may be included in the speech noise. The non-speech noise may refer to all kinds of noise except the speech generated by a human. For example, noise, vibration sound, music sound, phone sound, according to the operation of the external device may be included in non-speech noise.

### <Speech recognition result (text corresponding to user speech)>

The misrecognition environment information may not include a text corresponding to the user speech, and the recognition environment information may further include a text corresponding to the user speech.

For example, when the confidence score about the speech recognition is greater than or equal to a threshold value, the environment information storage module 10 may obtain a text corresponding to the user speech by using a speech recognition model (e.g., speech-to-text (STT) model). Then, the environment information storage module 10 may store the recognition environment information including the obtained text in the memory 140.

However, the embodiment is not limited thereto, and the misrecognition environment information may include some of the texts corresponding to the user speech. For example, the misrecognition environment information may include a text corresponding to a partial word (or some word segments) of which confidence score is greater than or equal to a threshold value among a plurality of words (or word segments) recognized in the entire user speech, that is, included in the user speech.

For example, the environment information storage module 10 may obtain the confidence score of each of a plurality of words included in the user speech, obtain a text corresponding to some words (or some word segments) of which confidence score confidence score is greater than or equal to a threshold value among a plurality of words (some word segments), and may ignore the remaining words (or remaining word segments) of which confidence score is less than the threshold value.

### <Information about peripheral object>

According to one or more embodiments, the environment information storage module 10 may obtain object information located around the electronic device 100 at a time when a user speech is received based on sensing data of a sensor provided in the electronic device 100. Here, the object information may include whether a window is opened, whether a door is opened, whether a human is present, whether a pet is present.

However, this is merely exemplary, and an object may include various types of objects that generate speech noise or non-speech noise in addition to the aforementioned window, door, human, or pet.

### <Information about number of repetition>

According to one or more embodiments, the environment information storage module 10 may obtain environment information including a time point at which the user speech is received (or date and time), a place where the user speech is uttered, a place where the electronic device 100 is located, operation information of the electronic device 100, user identification information, an external device located nearby, operation information of the external device, language information of user speech (e.g., ko-KR, en-US), user speech, peripheral object information, and if the obtained environment information is the same or similar to the environment information stored in the memory 140 by a threshold value or more, the repetition number information of the environment information stored in the memory 140 may be increased.

For example, if environment information that is the same as or similar to the currently obtained environment information has been previously obtained, the environment information storage module 10 may increase the number of repetition information included in the environment information previously obtained and stored in the memory 140.

As another example, if environment information stored in the memory 140 equal to or similar by a threshold value with the obtained environment information is not identified, the environment information storage module 10 may generate new environment information from the obtained environment information and store the information in the memory 140. For example, the environment information storage module 10 may generate the currently obtained environment information as new environment information if environmental information identical to or similar to the currently obtained environment information has not been previously obtained

Hereinafter, a method for generating a learning user speech based on environment information stored in the memory 140 by a learning user speech generation module will be described.

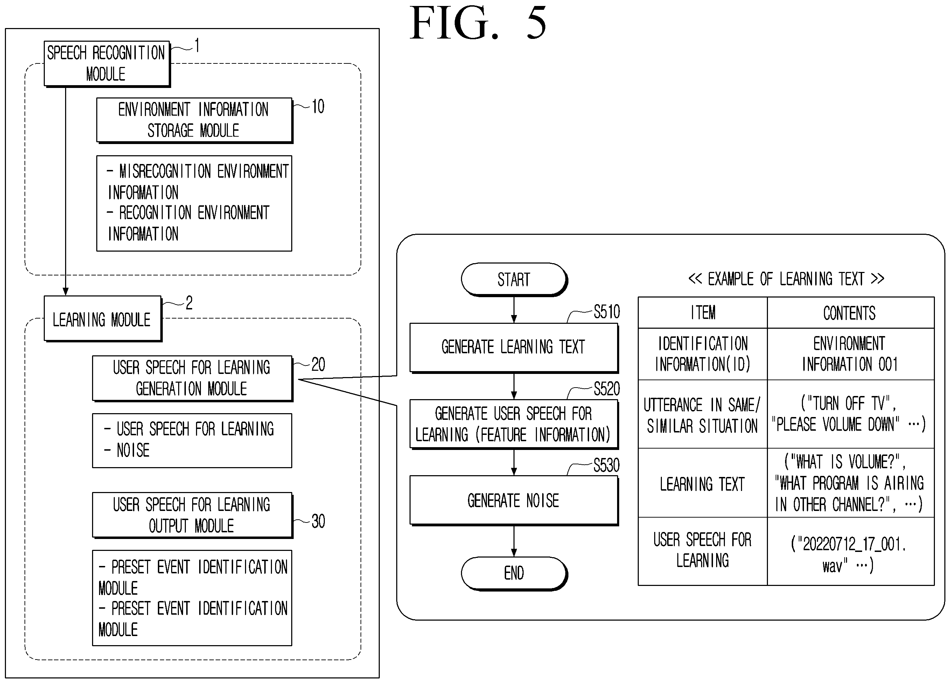

FIG. 5 is a diagram illustrating a method for obtaining a user voice for learning based on environment information according to one or more embodiments of the disclosure.

Referring to FIG. 5, the learning user speech generation module 20 may obtain learning user speech based on environment information stored in the memory 140 in operation S510.

Hereinafter, various embodiments of generating learning text by the learning user speech generation module 20 based on environment information will be described.

### <Generate learning text by using a time point of receiving user speech>

For example, the user speech generation module 20 for learning may generate a learning text based on a time when a user speech included in the environment information is received.

For example, if the time point at which the user speech is received is 12 pm, the user speech generation module 20 for learning may generate a text like "please volume down" or "please turn off TV" that is frequently uttered in the corresponding time period as a learning text, and when the time point at which the user speech is received is 6 am, the learning user speech generation module 20 may generate "please notice today's schedule", which is a sentence frequently uttered in the corresponding time period, as learning text.

### <Generating learning text by using a place where user speech is uttered>

For example, the learning user speech generation module 20 may obtain learning text based on a place where user speech included in the environment information is uttered.

For example, when a place where a user speech is uttered is living room, the user speech generation module 20 for learning may generate "please turn on TV", which is a sentence frequently uttered in the living room, as a learning text, and when the place where the user's speech is uttered is kitchen, the learning user speech generation module 20 may generate "please inform recipe", which is a sentence frequently uttered in the kitchen, as a learning text.

### <Generate a learning text using operation information of an electronic device and a place where the electronic device is located>

For example, the learning user speech generation module 20 may obtain learning text based on a place where the electronic device 100 included in the environment information is located.

For example, when the place where the electronic device 100 is located is a dress room, the learning user speech generation module 20 may generate a learning text for "please turn on a dehumidification mode" which is a sentence frequently uttered in the dress room.

The learning user speech generation module 20 may obtain learning text based on operation information of the electronic device 100 included in the environment information.

For example, if the channel information being output by the electronic device 100 is a sports channel based on the operation information of the electronic device 100, the user speech generation module 20 for learning may generate "please notify current score", which is a sentence frequently uttered when watching a sports channel, as learning text.

As another example, if the electronic device 100 is in a standby mode based on the operation information of the electronic device 100, the user speech generation module 20 for learning may generate, as a learning text, a sentence like "please turn on TV" that is frequently uttered in the standby mode of the electronic device 100.

### <Generate a learning text by using an external device located nearby and operation information of the external device>

For example, the learning user speech generation module 20 may obtain a learning text based on operation information of an external device located nearby the electronic device 100 included in the environment information.

For example, if the user speech generation module 20 for learning is a cooling mode of an external device based on the operation information of the external device, the user speech generation module 20 for learning may generate a learning text for "please raise a cooling temperature" which is a sentence frequently uttered in a cooling mode of the external device.

As another example, if the external device is in a turbo mode based on the operation information of the external device, the user speech generation module 20 for learning may generate, as a learning text, a "please operation in a low noise mode" which is a sentence frequently uttered in a turbo mode of the external device.

In the above-described example, the user speech generation module 20 for learning may generate learning text in consideration of the time point (or date and time) at which the user speech included in the environment information is received, the place where the user speech is uttered, the place where the electronic device 100 is located, the operation information of the electronic device 100, the external device located nearby, the operation information of the external device, or may generate learning text in comprehensive consideration of the information.

On the other hand, the user speech generation module 20 for learning according to one or more embodiments may identify a sentence frequently uttered based on a text corresponding to a user speech included in recognition environment information.

### <Generate learning text by using speech recognition result>

For example, the learning user speech generation module 20 may obtain learning text based on speech recognition result included in the environment information.

For example, the user speech generation module 20 for learning may identify recognition environment information having a similarity greater than or equal to a threshold value among a plurality of pieces of environment information including both misrecognition environment information and recognition environment information.

Then, the learning user speech generation module 20 may identify, as learning text, a speech recognition result included in the identified recognition environment information, that is, a text corresponding to user speech.

For example, the user speech generation module 20 for learning may obtain a feature vector corresponding to each of a plurality of pieces of environment information, and may identify, based on the plurality of feature vectors, at least recognition environment information having a similarity equal to or greater than a threshold value and misrecognition environment information from among the plurality of pieces of environment information.

Here, the user speech generation module 20 for learning may obtain a feature vector corresponding to each of a plurality of pieces of environment information in a vector space, and may identify at least one recognition environment information having a similarity equal to or greater than a threshold value with any one misrecognition recognition environment information by using a function indicating a distance between the plurality of feature vectors as a value of 0 to 1. However, this is merely an example, and the learning user speech generation module 20 may use various similarity identification functions and similarity identification algorithms.

The learning user speech generation module 20 may obtain learning text based on speech recognition result included in at least one identified recognition environment information.

According to one example, the environment information may include repetition number information, and the learning user speech generation module 20 may reduce a threshold value as the repetition number information included in the misrecognition environment information increases, and may reduce a threshold value when identifying at least one recognition environment information having a similarity equal to or greater than the reduced threshold value.

For example, the user speech generation module 20 for learning may identify recognition environment information (i.e., recognition environment information greater than or equal to a threshold similarity compared to misrecognition environment information) within a threshold distance (e.g., 0.7) from misrecognition environment information in a vector space as recognition environment information having a similarity by a threshold value or more with the corresponding misrecognition environment information.

In addition, the learning user speech generation module 20 may reduce a threshold distance (that is, a threshold similarity is reduced) as the number of repetitions included in the corresponding misrecognition environment information increases, and may identify recognition environment information in a vector space within a reduced threshold distance (e.g., 0.5) as recognition environment information having a similarity equal to or greater than a threshold value.

For example, when the repetition number information included in the misrecognition environment information is greater than or equal to a threshold number of times, the learning user speech generation module 20 may obtain at least one recognition environment information having a confidence score about the speech recognition result greater than or equal to a threshold value (that is, recognition environment information) and having a similarity greater than or equal to a threshold similarity with misrecognition environment information among the plurality of pieces of environment information, and obtain the learning user speech based on the text included in the at least one recognition environment information. The learning user speech generation module 20 may reduce a threshold similarity as the repetition number information included in the misrecognition environment information increases, and obtain at least one piece of recognition environment information from among the plurality of pieces of environment information based on the reduced threshold similarity.

The learning user speech generation module 20 may obtain a learning text based on some words included in the misrecognition environment information.

For example, the misrecognition environment information includes a text corresponding to a partial word (or a partial word segment) of which confidence score is greater than or equal to a threshold value among a plurality of words (or a word segment) recognized in the entire user speech, and the learning user speech generation module 20 may obtain a learning text by using some words.

For example, if the some words included in the misrecognition environment information is "dehumidification", the learning user speech generation module 20 may add remaining words, for example, "please turn on a mode" to "dehumidification" and may obtain "please turn on a dehumidification mode" as a learning text.

As another example, if a part of words included in the misrecognition environment information is "today's schedule", the user speech generation module 20 for learning may obtain, for example, "please let me know today's schedule" or "what is today's schedule" as learning text by adding, for example, "please let me know", "what is".

### <Generate user speech for learning corresponding to learning text using feature information of user speech>

The learning user speech generation module 20 may generate leaning user speech corresponding to the learning text by using a TTS model based on feature information of the user speech included in the environment information in operation S520.

For example, the learning user speech generation module 20 may generate a learning user speech corresponding to the learning text by using a TTS model generated based on the feature information of the user speech so that the learning user speech may have an utterance frequency similar to that of the user speech.

For example, when it is identified that the gender of the user is male based on the feature information of the user speech and the age is in the middle age, the TTS model may generate the learning user speech corresponding to the learning text by using the speech of the middle-aged man.

Subsequently to S520, the user speech generation module 20 for learning may reproduce the noise generated in the surrounding environment of the electronic device 100 while the user speech is received based on the misrecognition environment information while the electronic device 100 operates in the learning mode (i.e., to reproduce the misrecognition situation).

### <Identify noise by using a place where an electronic device is located and operation information of the electronic device>

First, the user speech generation module 20 for learning may control the electronic device 100 such that the electronic device 100 operates the same as or similar to the time during the reception of the user speech based on the operation information of the electronic device 100 included in the environment information. Since the electronic device 100 operates in the same or similar manner as the time when the user speech is received, noise according to the operation of the electronic device 100 may be reproduced.

For example, if the electronic device 100 outputs content to the sound volume 11 at the time when the user speech is received, the learning user speech generation module 20 may control the electronic device 100 so that the electronic device 100 outputs content to the sound volume 11.

As another example, if the electronic device 100 is operated in a low noise mode at the time when the user speech is received, the learning user speech generation module 20 may control the electronic device 100 to operate in a low noise mode.

### <Reproduce an external device located nearby and operation information of the external device>

The user speech generation module 20 for learning according to one or more embodiments may transmit a command for controlling an external device to an external device such that the external device operates in the same or similar manner to the reception of the user speech based on the operation information of the external device included in the environment information.

Since the external device is operated in the same or similar manner as the user speech is received according to the command, noise according to the operation of the external device may be reproduced.

For example, if the external device is operated in a dehumidification mode at the time when the user speech is received, the learning user speech generation module 20 may transmit a command for controlling the external device to operate in the dehumidification mode to the external device.

As another example, if the external device is operated in the standby mode at the time when the user speech is received, the learning user speech generation module 20 may transmit, to the external device, a command for controlling the external device to operate in the standby mode.

### <Reproduce noise by using a sound source>

According to one or more embodiments, the user speech generation module 20 for learning may obtain noise information (for example, including speech noise or non-speech noise) at a time when a user speech is received based on a sound source included in the stored environment information, and may control the electronic device 100 or the external device to output noise in operation S530.

For example, since the electronic device 100 or the external device outputs noise obtained from a sound source, noise generated in the surrounding environment may be reproduced at the time when the user speech is received.

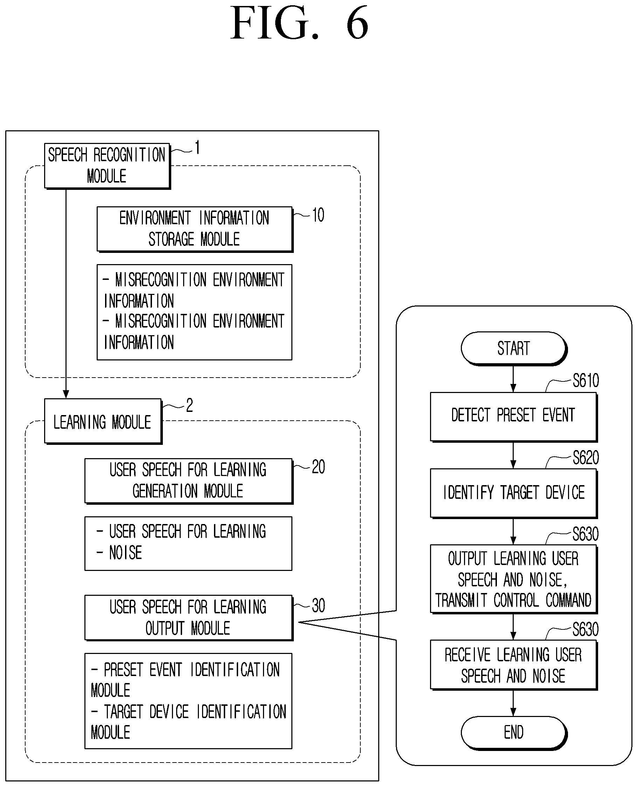

The one or more processors 150 may identify a target device to output learning user speech, noise, among the electronic device 100 and a plurality of external devices 210, ..., 240 located around the electronic device 100. Subsequently, the one or more processors 150 may transmit, to the target device, a command for controlling the target device to output the learning user speech and noise. A detailed description thereof is provided with reference to FIG. 6.

FIG. 6 is a diagram illustrating a method for outputting a user voice for learning according to one or more embodiments of the disclosure.

Referring to FIG. 6, the user speech output module 30 for learning may detect a preset event and identify whether it is possible to operate in a learning mode in operation S510. For example, when a preset event is detected, the learning user speech output module 30 may enter a learning mode. When the electronic device 100 enters a learning mode, the learning user speech output module 30 may reproduce noise generated in the surrounding environment of the electronic device 100 while the user speech is received based on the misrecognition environment information according to operation in S530 of FIG. 5.

Here, the preset event may be one of an event of entering a time zone set by a user, an event of entering a time zone corresponding to a time point when a user speech included in pre-stored environment information is received, and an event that a user is detected as going outside, an event in which an object located around the electronic device 100 corresponds to object information included in environment information obtained at a time when a user speech is received.

For example, when an event entering at 1 pm set by a user is detected, the learning user speech output module 30 may determine to operate in a learning mode.

**In** addition, when an event of entering 3 pm of Friday which is a time zone corresponding to the time point of receiving a user speech included in the preset environment information in which the information of numbers included in the prestored environment information is greater than or equal to a threshold number (e.g., 5 times) is detected, the learning user speech output module 30 may determine to operate in a learning mode. Also, when a user speech included in pre-stored environment information, which is included in pre-stored environment information is greater than or equal to a threshold number of times (for example, five times), is detected, a user speech output module 30 for learning may be determined to operate in a learning mode

**In** addition, the user speech output module 30 for learning may be determined to operate in a learning mode when an event without a user at home is detected based on sensing data of the sensor.

**In** addition, when a current state of an object located around the electronic device 100 corresponds to object information included in pre-stored environment information, the learning user speech output module 30 may determine to operate in a learning mode.

For example, when a window located around the electronic device 100 is open based on sensing data of the sensor and a door is closed, object information included in pre-stored environment information is in an open state, and when the door is closed, the learning user speech output module 30 may determine to operate in a learning mode.

It is also possible to determine to operate in the learning mode if the current user is detected as going out, travel, or going to word from the user terminal.

Then, the user speech output module 30 for learning may identify a target device for comparing a place where a user speech is uttered and a place where the electronic device is located while the electronic device 100 operates in a learning mode, or comparing a place where the user speech is uttered and a place where the external device is located to identify a target device for outputting the learning user speech in operation S520.

For example, the user speech output module 30 for learning may identify the electronic device 100 as a target device if the place where the user speech is uttered and the place where the electronic device 100 is located are the same, based on pre-stored environment information.

In another example, the user speech output module 30 for learning may identify the external device as a target device if the place where the user speech is uttered and the place where the external device is located are the same places based on pre-stored environment information.

In addition, the user speech output module 30 for learning may identify any one of a plurality of external devices as a target device based on a place where the user speech is uttered and a place where each of the plurality of external devices is located, based on pre-stored environment information.

Here, a place where any one external device identified as a target device is located may be the same place as a place where the user speech is uttered, or a place most adjacent to the place where the user speech is uttered.

In addition, the learning user speech output module 30 may identify a robot device (for example, a robot cleaner) capable of moving by using a driver among a plurality of external devices as a target device. According to one or more embodiments, the user speech output module 30 for learning may transmit a command for moving a user speech to a uttered place to a robot device. According to one or more embodiments, the robot device receiving the command may output the user speech for learning after moving to the place where the user speech is uttered. Here, the driver may include wheels for moving (or driving) the robot device and a wheel driving motor for rotating the wheels.

Then, the learning user speech output module 30 may transmit a command for controlling to output the learning user speech and noise to the target device in operation S530.

However, this is an example, and the learning user speech output module 30 may transmit a command for controlling to output the learning user speech to the target device, and control the electronic device 100 to output noise through the speaker 110 of the electronic device 100. The learning user speech output module 30 may transmit a command for controlling to output a user speech for learning to a target device, and may transmit a command for controlling to output noise to an external device.

Then, the learning user speech output module 30 may receive the learning user speech and noise outputted by the target device in operation S540, and the one or more processors 150 may train the speech recognition model by using the received learning user speech and noise.

The user speech generation module 20 for learning in FIG. 5 may obtain a plurality of user speeches for learning, not a single learning user speech. The learning user speech output module 30 may transmit, to a target device, a command for controlling the target device to sequentially output a plurality of user speeches for learning.

One or more processors 150 according to one or more embodiments may obtain confidence score for speech recognition by inputting a plurality of learning user speeches received through the microphone 120 into a trained speech recognition model. Subsequently, when the obtained confidence score is equal to or greater than a threshold value, the one or more processors 150 may adopt a trained speech recognition model and use the trained speech recognition model for speech recognition in a speech recognition mode.

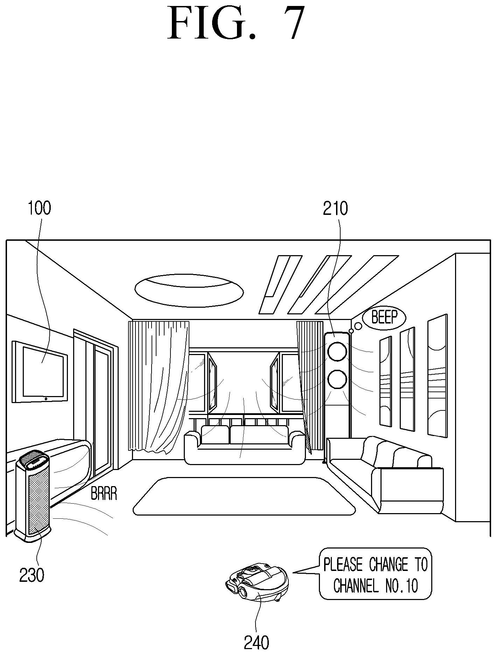

A specific description will refer to FIG. 7.

FIG. 7 is a diagram illustrating a method for training a voice recognition model according to one or more embodiments of the disclosure.

The electronic device 100 may enter a learning mode when the current surrounding environment of the electronic device 100 is similar to the misrecognition environment for the user speech in addition to the identification of the preset event.

Referring to FIG. 7, the learning user speech output module 30 may obtain current surrounding environment information of the electronic device 100 by using sensing data of the sensor.

Then, the learning user speech output module 30 may enter a learning mode when any one false recognition environment information similar to the current surrounding environment information is identified from among a plurality of misrecognition environment information.

For example, the user speech output module 30 for learning may obtain current surrounding environment information including object information (for example, whether a window is opened, whether a door is opened, whether a person is present, whether a pet is present) located around the electronic device 100 based on the sensing data.

Then, the learning user speech output module 30 may obtain any one misrecognition environment information based on object information included in each of the plurality of misrecognition environment information and object information included in the current surrounding environment information.

Then, the user speech output module 30 for learning may enter a learning mode, and may output a user speech for learning through any one external device of the plurality of external devices or the electronic device 100 (that is, through the target device) based on any one of the misrecognition environment information. In addition, the user speech output module 30 for learning may reproduce noise generated in the surrounding environment of the electronic device 100 while obtaining any one misrecognition environment information by using at least one of the plurality of external devices and the electronic device 100.

Then, the speech recognition model may receive noise output by at least one of a plurality of external devices and a user speech for learning output by the target device, and perform learning based on the received user speech for learning and the received noise.

The speech recognition model may perform learning by using the user speech for learning received in the reproduced misrecognition situation, so that learning may be performed with a customized speech recognition model of an in-house environment in which the electronic device 100 is located.

For convenience of description, the operation of the environment information storage module 10, the learning user speech generation module 20, and the learning user speech output module 30 is separately described, but this is an example and may be implemented by an operation of one or more processors 150.

The function related to the artificial intelligence model including the speech recognition model is operated through one or more processors 150 and the memory 140 of the electronic device 100.

The processor may be composed of one or a plurality of processors. The one or a plurality of processors may include at least one of a central processing unit (CPU), a graphics processing unit (GPU), and a neural processing unit (NPU) but is not limited to the aforementioned example of the processor.

The CPU is a general-use processor capable of performing AI calculation in addition to general calculation and may efficiently execute a complicated program through multilayer cache structure. The CPU is advantageous for serial processing capable of organic association between previous calculation result and the next calculation result through sequential calculation. The general-use processor is not limited to the aforementioned example excluding a case of limiting to a CPU described above.

The GPU is a processor for mass operation such as floating point calculation used for graphic processing and may perform large-capacity operation (mass operation) in parallel by integrating core in large capacity. Particularly, GPU may be advantageous in parallel processing such as convolution calculation as compared to CPU. In addition, GPU may be used as a co-processor to supplement a function of the CPU. The processor for mass operation is not limited to the above example except when the processor is specified as the GPU described above.

The NPU is a processor specialized for AI operation using AI neural network and may implement each layer composing the AI neural network as hardware (e.g., silicon). Since the NPU is designed to be specialized according to a requirement specification of the company, the degree of freedom is lower than that of a CPU or a GPU, but an artificial intelligence operation for requesting a company may be efficiently processed. A processor specialized for artificial intelligence calculation may be implemented in various forms such as a Tensor Processing Unit (TPU), an Intelligent Processing Unit (IPU), and a Vision Processing Unit (VPU). The artificial intelligence processor is not limited to the above-described example, except for a case where it is specified as the NPU described above.

The one or more processors may also be implemented with a System on Chip (SoC). The SoC may further include, in addition to the one or more processors, a memory, a processor, and a network interface such as a bus for data communication between the processor and the memory.

When a plurality of processors are included in the SoC included in the electronic device 100, the electronic device 100 may perform an operation related to artificial intelligence (for example, an operation related to learning or inference of an artificial intelligence model) by using some of the plurality of processors. For example, the electronic device 100 may perform an operation related to artificial intelligence by using at least one of a GPU, an NPU, a VPU, a TPU, and a hardware accelerator specialized for an artificial intelligence operation such as a convolution operation, a matrix multiplication operation, among a plurality of processors. However, this is merely an embodiment, and an operation related to artificial intelligence may be processed by using a CPU and a general-purpose processor.

In addition, the electronic device 100 may perform an operation on a function related to artificial intelligence by using a multi-core (for example, a dual core, a quad core) included in one processor. In particular, the electronic device 100 may perform an artificial intelligence operation such as a convolution operation and a matrix multiplication operation in parallel using a multi-core included in the processor.

The one or a plurality of processors control the processing of the input data in accordance with a predefined operating rule or artificial intelligence (AI) model stored in the non-volatile memory and the volatile memory. The predefined operating rule or artificial intelligence model is provided through training or learning.

Here, being provided through learning means that, by applying a learning algorithm to a plurality of learning data, a predefined operating rule or AI model of a desired feature is made. The learning may be performed in a device itself in which AI according to one or more embodiments is performed, and/or may be implemented through a separate server/system.

The AI model may consist of a plurality of neural network layers. Each layer has at least one weight value, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause the target device to make a determination or prediction by itself. Examples of learning algorithms include, but are not limited to, supervised learning, unsupervised learning, semi-supervised learning, or reinforcement learning.

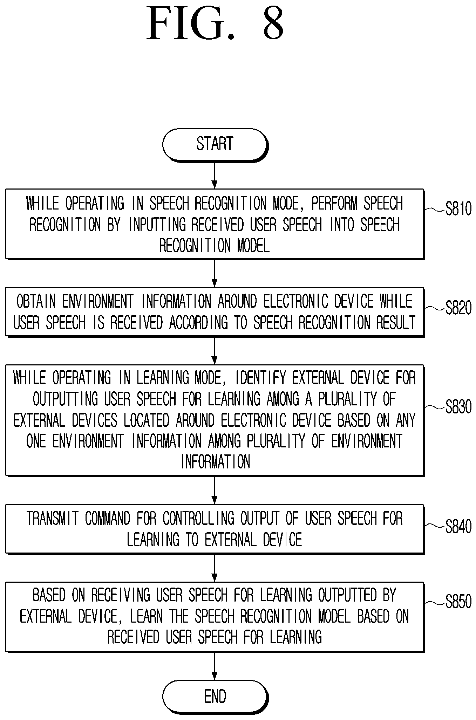

FIG. 8 is a flowchart illustrating a method for controlling an electronic device according to one or more embodiments of the disclosure.

The control method of an electronic device may include, while the electronic device operates in a speech recognition mode, perform speech recognition by inputting a received user speech into a speech recognition model in operation S810.

The method may include obtaining environment information around the electronic device while the user speech is received according to the speech recognition result in operation S820.

While the electronic device is operating in a learning mode, the method may include identifying an external device for outputting a user speech for learning among a plurality of external devices located around the electronic device based on any one environment information among a plurality of environment information stored in the memory in operation S830.

The method may include transmitting a command for controlling the output of the user speech for learning to the external device in operation S840.

Based on receiving the user speech for learning outputted by the external device, the method may include learning the speech recognition model based on the received user speech for learning in operation S850.

The obtaining the environment information in operation S820 may include obtaining information on a place where the user speech is uttered while the user speech is received in the speech recognition mode, and store the environment information including information on a place where the user speech is uttered in the memory, and the identifying the external device in operation S830 may include identifying the external device for outputting the user speech for learning among the plurality of external devices based on the information on the place where the user speech included in the one of environment information is uttered in the learning mode.

The obtaining the environment information in operation S820 may include obtaining operation information of the external device while the user speech is received in the speech recognition mode, and the transmitting in operation S840 may include transmitting, to the external device, a command for operating the external device to correspond to operation information of the external device included in the one environment information in the learning mode, the learning in operation S850 may include, while the external device is operating according to the command, receiving noise occurred in the external device and the user speech for learning output by the external device, and learning the speech recognition model based on the received user speech and the received noise.

The identifying the external device in operation s830 may include, in the learning mode, identifying noise around the electronic device while the user speech is received based on the one environment information, and the transmitting in operation S840 may include transmitting a command for controlling the external device to output the noise to the external device, and the learning in operation S850 may include, during outputting the noise by the external device according to the command, receiving the user speech for learning and the noise outputted by the external device, and learning the speech recognition model based on the received user speech and the noise.

The obtaining the environment information in operation S820 may include obtaining object information located around the electronic device based on sensing data of the sensor while the user voice is received in the voice recognition mode, and storing the environment information including the object information, and the control method may include, based on receiving new sensing data from the sensor, identifying whether object information according to the new sensing data corresponds to object information included in each of the plurality of pieces of environment information, based on object information according to the new sensing data corresponding to object information included in the one environment information, entering the learning mode.

The method may further include, while operating in the speech recognition mode, generating a text-to-speech (TTS) model based on the user speech received through the microphone, and obtaining the user speech for learning based on the TTS model.

Each of the plurality of environment information may include a confidence score about the speech recognition result, and based on the confidence score being greater than or equal to a threshold value, include a text corresponding to the speech recognition result.

The method may further include, based on the obtained environment information corresponding to the one of environment information, increasing repetition frequency information included in the one of the environment information.

The obtaining the environment information in operation S820 may include, based on the repetition number information included in the one of environment information being equal to or greater than a threshold number of times, obtaining the at least one environment information having the confidence score of the voice recognition result among the plurality of pieces of environment information being equal to or greater than a threshold value, and having a similarity equal to or greater than a threshold similarity, and the identifying the external device in operation S830 may include obtaining the user speech for learning based on the text included in the at least one environment information.

The various embodiments may be applicable to not only an electronic device but also all types of electronic devices capable of speech recognition.

The various example embodiments described above may be implemented in a recordable medium which is readable by computer or a device similar to computer using software, hardware, or the combination of software and hardware. In some cases, embodiments described herein may be implemented by the processor itself. According to a software implementation, embodiments such as the procedures and functions described herein may be implemented with separate software modules. Each of the above-described software modules may perform one or more of the functions and operations described herein.

The computer instructions for performing the processing operations of the electronic device according to the various embodiments described above may be stored in a non-transitory computer-readable medium. The computer instructions stored in this non-transitory computer-readable medium cause the above-described specific device to perform the processing operations of the electronic device 100 according to the above-described various embodiments when executed by the processor of the specific device.

The non-transitory computer readable medium may refer, for example, to a medium that stores data, such as a register, a cache, a memory, and is readable by a device. For example, the aforementioned various applications, instructions, or programs may be stored in the non-transitory computer readable medium, for example, a compact disc (CD), a digital versatile disc (DVD), a hard disc, a Blu-ray disc, a universal serial bus (USB), a memory card, a read only memory (ROM), and may be provided.

While example embodiments have been illustrated and described, the disclosed embodiments are not limited to the specific embodiments described above. It will be understood by those skilled in the art that various changes in form and details may be made therein without departing from the true spirit and full scope of the disclosed embodiments, including the appended claims and their equivalents.

## Claims

1. An electronic device comprising:
a speaker;
a microphone;
a communication interface;
a memory storing at least one instruction; and
one or more processors connected to the speaker, the microphone, the communication interface, and the memory,
wherein the one or more processors are configured to:
while the electronic device operates in a speech recognition mode, perform speech recognition by inputting a user speech signal from the microphone into a speech recognition model, the user speech signal corresponding to a user speech received through the microphone,
obtain environment information around the electronic device while the user speech is received according to a result of the speech recognition,
store the obtained environment information in the memory,
while the electronic device is operating in a learning mode, identify an external device for outputting a user speech for learning from among a plurality of external devices based on the environment information that is among a plurality of environment information stored in the memory,
control the communication interface to transmit a command to the external device for controlling the output of the user speech for learning.

2. The electronic device of claim 1, wherein the one or more processors, based on receiving a user speech for learning signal from the microphone, the user speech for learning signal corresponding to the user speech for learning outputted by the external device and received by the microphone, train the speech recognition model with respect to the received user speech for learning signal

3. The electronic device of claim 1, wherein the one or more processors are further configured to:
obtain information on a place where the user speech is uttered while the user speech signal is received in the speech recognition mode, the environment information including the information on the place where the user speech is uttered, and
identify the external device for outputting the user speech for learning from among the plurality of external devices based on the information on the place where the user speech is uttered.

4. The electronic device of claim 2, wherein the one or more processors are further configured to:
obtain operation information of the external device while the user speech signal is received in the speech recognition mode, the environment information including the operation information,
transmit, to the external device, a command for operating the external device that corresponds to operation information of the external device, and
train the speech recognition model when the external device is operated according to the command for operating the external device and the user speech for learning signal is received.

5. The electronic device of claim 4, wherein the one or more processors are further configured to:
while the external device is operating according to the command for operating the external device, receive an other noise signal corresponding to an other noise that has occurred in the external device, and
train the speech recognition model based on the received user speech signal and the received other noise signal.

6. The electronic device of claim 1, wherein the one or more processors are further configured to,
in the learning mode, identify an other noise signal corresponding to an other noise that is around the electronic device while the user speech signal is received based on the environment information,
control the communication interface to transmit a command to the external device for controlling the external device to output the other noise, and
during an outputting of the other noise by the external device according to the command to the external device for controlling the external device to output the other noise, receive the user speech for learning signal and the other noise signal, and train the speech recognition model based on the received user speech for learning and the other noise.

7. The electronic device of claim 1, further comprising:
a sensor,
wherein the one or more processors are further configured to:
obtain object information located around the electronic device based on sensing data of the sensor while the user speech signal is received in the speech recognition mode, the environment information including the object information,
based on receiving new sensing data from the sensor, identify whether object information according to the new sensing data corresponds to the object information included in the environment information,
based on the object information according to the new sensing data corresponding to the object information included in the environment information, enter the learning mode, and
while operating in the learning mode, control the communication interface to transmit a command to the external device for controlling the output of the user speech for learning to the external device.

8. The electronic device of claim 2, wherein the one or more processors are further configured to:
while operating in the speech recognition mode, generate a text-to-speech (TTS) model based on the user speech received through the microphone, and
obtain the user speech for learning signal based on the TTS model.

9. The electronic device of claim 2, wherein each of the plurality of environment information includes a confidence score about the result of the speech recognition, and based on the confidence score being greater than or equal to a threshold value, includes a text corresponding to the result of the speech recognition.

10. The electronic device of claim 9, wherein the one or more processors are further configured to:
based on the electronic device entering the learning mode, identify any of the plurality of environment information stored in the memory of which the confidence score is less than the threshold value,
obtain at least one of the plurality of environment information having the confidence score equal to or greater than the threshold value and having a similarity equal to or greater than a threshold similarity to the environment information, and
obtain the user speech for learning signal based on the text included in the at least one of the plurality of environment information having the confidence score equal to or greater than the threshold value.

11. The electronic device of claim 2, wherein the one or more processors are further configured to, based on the obtained environment information corresponding to the environment information stored in the memory, increase repetition frequency information included in the environment information.

12. The electronic device of claim 11, wherein the one or more processors are further configured to:
based on the repetition number information included in the environment information being equal to or greater than a threshold number of times, obtain at least one of the plurality of environment information having a confidence score of the result of the speech recognition being equal to or greater than a threshold value, and having a similarity equal to or greater than a threshold similarity,
obtain the user speech for learning signal based on text included in the at least one environment information, and
wherein as the repetition number information increases, the threshold similarity is reduced.

13. The electronic device of claim 1, wherein the one or more processors are further configured to, based on a preset event being identified, enter the electronic device to the learning mode.

14. A method of controlling an electronic device, the method comprising:
while the electronic device operates in a speech recognition mode, performing speech recognition by inputting a user speech signal from a microphone into a speech recognition model, the user speech signal corresponding to a received user speech received through the microphone;
obtaining environment information around the electronic device while the user speech is received according to a result of the speech recognition;
storing the obtained environment information in a memory,
while the electronic device is operating in a learning mode, identifying an external device for outputting a user speech for learning from among a plurality of external devices based on the environment information that is among a plurality of environment information stored in the memory;
transmitting a command to the external device for controlling the output of the user speech for learning.

15. The method of claim 14, further comprising, based on receiving a user speech for learning signal from the microphone, the user speech for learning signal corresponding to the user speech for learning outputted by the external device and received by the microphone, training the speech recognition model with respect to the received user speech for learning signal.
